# EUROPÄISCHE PATENTANMELDUNG

(11) **EP 1 246 482 A2**
(43) Veröffentlichungstag der Anmeldung: **02.10.2002**
(21) Anmeldenummer: 02100303.3
(22) Anmeldetag: 27.03.2002
(51) Int. Cl.: H04Q 7/22

(54) **Pager-System**

(30) Priorität: 28.03.2001 DE 10115343
(71) Anmelder: Philips Corporate Intellectual Property GmbH, 20099 Hamburg (DE); Koninklijke Philips Electronics N.V., 5621 BA Eindhoven (NL)
(72) Erfinder: Wippich, Wolfgang, Philips Corp. Int. Prop. GmbH, 52066 Aachen (DE); Walters, Eckhard, Philips Corp. Int. Prop. GmbH, 52066 Aachen (DE)
(74) Vertreter: Volmer, Georg, Dipl.-Ing.

(57) **Zusammenfassung**

Pager-System mit einer Basis-Transceiver-Station (2) zur kabellosen Übertragung von Daten nach dem GSM-Standard, einem SMS-Center (5) zur Speicherung von Pager-Kurznachrichten, das mit der Basis-Transceiver-Station (2) in datenübertragender Weise verbunden ist und mindestens einem Pager-Gerät (9), welches eine nach dem GSM-Standard arbeitende Sende-/Empfangs-Einheit (10) zum kabellosen Empfang von Pager-Kurznachrichten von der Basis-Transceiver-Station (2), eine mit der Sende-/Empfangs-Einheit (10) in datenübertragender Weise verbundene Ausgabe-Einheit (15) zur Anzeige der empfangenen Pager-Kurznachrichten und eine Energieverbrauchs-Steuer-Einheit aufweist, die derart ausgebildet ist, dass sie das Pager-System (1) für vorbestimmbare Zeiträume von einem Normalbetriebs-Modus in einen Energiespar-Modus schaltet.

## Beschreibung

Die Erfindung betrifft ein Pager-System zur Übertragung von Pager-Kurznachrichten.

Bei herkömmlichen Pager-Diensten kommuniziert ein ortsfester Sender mit zahlreichen Pager-Geräten. Der Sender sendet die zu übertragenen Nachrichten ständig aus und das jeweilige Pager-Gerät befindet sich ständig in Empfangsbereitschaft und zeigt eine empfangene Nachricht an. Nachteilig ist hieran, dass die Einrichtung von Pager-Diensten und der Aufbau von Pager-Netzwerken vor allem in weniger entwickelten Ländern noch nicht weit fortgeschritten und kostenaufwendig ist.

Der Erfindung liegt die Aufgabe zugrunde, ein Pager-System zu schaffen, das energiesparend arbeitet.

Die Aufgabe wird durch die Merkmale des Anspruches 1 gelöst. Der Kern der Erfindung besteht darin, ein SMS-Nachrichten-System nach dem GSM-Standard von Mobilfunknetzen zu nutzen, um Pager-Kurznachrichten zu übertragen. Hierbei schaltet sich das Pager-Gerät regelmäßig von einem Normalbetriebs-Modus in einen Energiespar-Modus.

Weitere vorteilhafte Ausgestaltungen der Erfindung ergeben sich aus den Unteransprüchen.

Zusätzliche Merkmale und Einzelheiten der Erfindung ergeben sich aus der Beschreibung zweier Ausführungsbeispiele anhand der Zeichnung. Es zeigen:
- Fig. 1: eine schematische Darstellung eines Pager-Systems gemäß einer ersten Ausführungsform, und
- Fig. 2: eine schematische Darstellung eines Pager-Systems gemäß einer zweiten Ausführungsform.

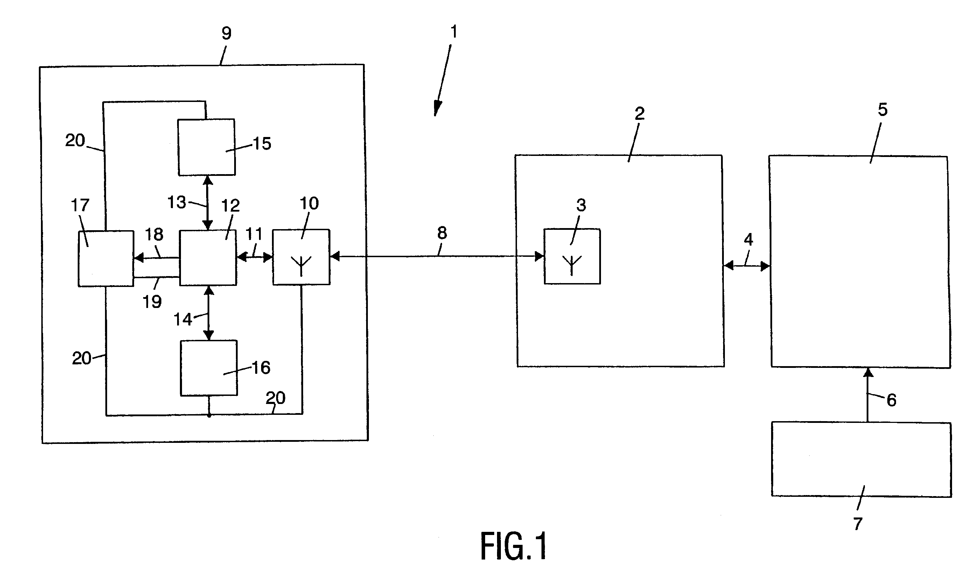

Im folgenden wird unter Bezugnahme auf Figur 1 eine erste Ausführungsform der Erfindung beschrieben. Ein Pager-System 1 weist eine ortsfeste Basis-Transceiver-Station 2 mit einer Sende-/Empfangs-Einheit 3 auf. Bei der Basis-Transceiver-Station 2 handelt es sich um eine normale nach dem GSM-Standard arbeitende Basisstation eines Mobilfunknetzes. Der Aufbau einer solchen Station 2 ist allgemein bekannt. Über eine Datenverbindung 4 ist ein SMS-Center 5 mit der Basis-Transceiver-Station 2 verbunden. Bei dem SMS-Center 5 handelt es sich um eine Einheit zur Speicherung von Kurznachrichten, sogenannten SMS-Nachrichten (Short Messags Service). Das SMS-Center 5 wird dazu verwendet, um Pager-Nachrichten zwischenzuspeichern. Das SMS-Center 5 ist über eine Datenverbindung 6 mit einer Eingabe-Einheit 7 zur Eingabe von Pager-Kurznachrichten verbunden. Die Basis-Transceiver-Station 2, das SMS-Center 5 sowie die Eingabe-Einheit 7, die in einem Pager-System 1 mehrfach über das Land verteilt vorgesehen sein können, bilden das ortsfeste Rückgrad des Pager-Systems 1.

Die Basis-Transceiver-Station 2 kommuniziert über eine Funkverbindung 8 mit einer Vielzahl von Pager-Geräten 9, von denen in Figur 1 nur eines dargestellt ist. Die Pager-Geräte 9 sind in der Regel klein und handlich. Ein Pager-Gerät 9 weist eine Sende-/Empfangs-Einheit 10 auf, die mit der Sende-/Empfangs-Einheit 3 nach dem GSM-Standard über die Funkverbindung 8 kommuniziert. Die Sende-/Empfangs-Einheit 10 ist über eine Datenleitung 11 mit der zentralen Daten-Verarbeitungs-Einheit (CPU) 12 verbunden. Die Daten-Verarbeitungs-Einheit 12 ist über weitere Leitungen 13, 14 mit einer Eingabe-/Ausgabe-Einheit 15 bzw. einer Speicher-Einheit 16 verbunden. Die Eingabe-/Ausgabe-Einheit 15 umfasst zur Eingabe eine Tastatur und zur Ausgabe eine Anzeige, insbesondere Flüssigkristallanzeige. Es ist möglich zum Anzeigen der Pager-Kurznachrichten lediglich eine Ausgabe-Einheit 15 vorzusehen, die die empfangsnen Pager-Kurznachrichten anzeigt. Des weiteren ist eine als Energieverbrauchs-Steuer-Einheit ausgebildete Taktsteuer-Stromversorgungs-Einheit 17 vorgesehen, die über eine Schalt-/Steuer-Leitung 18 mit der Daten-Verarbeitungs-Einheit 12 verbunden ist. Die Leitungen 11, 13, 14, 18 dienen primär der Übertragung von Daten. Die Taktsteuer-Stromversorgungs-Einheit 17 ist über eine Takt-/Spannungs-Versorgungs-Leitung 19 mit der Daten-Verarbeitungs-Einheit 12 verbunden. Die Taktsteuer-Stromversorgungs-Einheit 17 ist ferner über Takt-/Spannungs-Versorgungs-Leitungen 20 und 21 mit der Eingabe-/Ausgabe-Einheit 15 bzw. der Speicher-Einheit 16 und der Sende-/Empfangs-Einheit 10 verbunden. Die Leitungen 19, 20 und 21 dienen der Takt- und Spannungsversorgung der zuvor erwähnten Komponenten.

Im folgenden wird die Funktion des Pager-Systems 1 beschrieben. Pager-Kurznachrichten werden durch die Eingabe-Einheit 7 eingegeben und über die Datenverbindung 6 an das SMS-Center 5 übertragen und dort zwischengespeichert. In regelmäßigen Zeitabständen schaltet das Pager- Gerät 9 seinen Betriebszustand in den Normalbetriebs-Modus um, worauf gemäß dem Protokoll des GSM-Standards die Sende-/Empfangs-Einheit 10 des Pager-Geräts 9 mit der Sende-/Empfangs-Einheit 3 der BTS Verbindung aufnimmt, um die Verfügbarkeit des Pager-Geräts 9 anzuzeigen. Daraufhin kann die Basis-Transceiver-Station 2 die Information über die Verfügbarkeit des Pager-Geräts 9 an das SMS-Center 5 weiterleiten, um die Übertragung von anstehenden Pager-Nachrichten auszulösen. Falls Pager-Nachrichten vorhanden sind, so werden die gespeicherten Pager-Nachrichten über die Datenverbindung 4 von dem SMS-Center 5 abgerufen und über die Funkverbindung 8 an das Pager-Gerät 9 übertragen und dort unter Vermittlung der Datenverarbeitungs-Einheit 12 in der Eingabe-/Ausgabe-Einheit 15 zur Anzeige gebracht und/oder in der Speicher-Einheit 6 gespeichert. Nach einer vorbestimmten Zeit wird die Taktsteuer-Stromversorgungs-Einheit 17 über die zentrale Datenverarbeitungs-Einheit 12 veranlasst, den Systemtakt niederfrequenter zu machen, damit weniger Strom verbraucht wird. Die zentrale Datenverarbeitungs-Einheit 12 kann die Taktsteuer-Stromversorgungs-Einheit 17 auch dazu veranlassen, dass die Taktversorgung für die einzelnen Komponenten 10,16,15 unterbrochen wird. Dieser Energiespar-Modus wird für eine festgelegte Zeit beibehalten, nach der sich automatisch wieder der Normalbetriebs-Modus einstellt. Auf diese Weise ist es möglich, das Pager-Gerät 9 bei gleicher Betriebszeit ohne erneutes Aufladen kleiner auszugsstalten oder entsprechend die Standby-Zeit zu erhöhen. Ein zentraler Vorteil des Pager-Systems 10 ist, dass in Bereichen z. B. der zweiten und dritten Welt, in denen der Aufbau eines Pager-Systems zu kostspielig wäre, auf bestehende Mobilfunknetze nach dem GSM-Standard zurückgegriffen werden kann. Es ist deshalb möglich, auch in diesen Ländern Paging-Dienste einzurichten. Ein weiterer Vorteil ist, dass bei herkömmlichen Pager-Protokollen Nachrichten nicht verschlüsselt übertragen werden. Dies ist bei Übertragungen nach dem GSM-Standard der Fall. Es ist somit eine zusätzliche Vertraulichkeit gegeben. Darüber hinaus ist bei herkömmlichen Pager-Geräten ein ständiger Empfang erforderlich, um auf einem fest vorgegebenen Kanal eingehende Pager-Kurznachrichten zu empfangen.

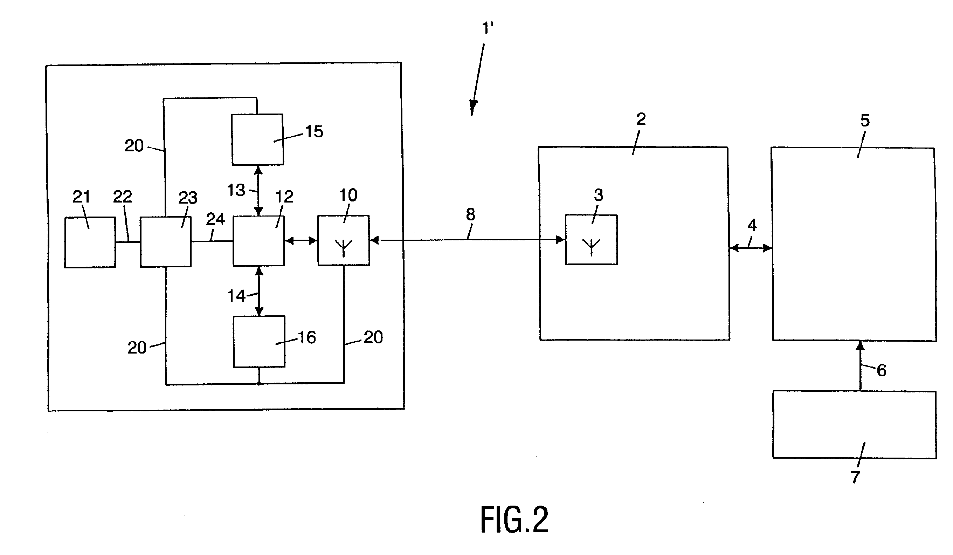

Im folgenden wird unter Bezugnahme auf Figur 2 eine zweite Ausführungsform der Erfindung beschrieben. Identische Teile erhalten dieselben Bezugszeichen wie bei der ersten Ausführungsform, auf deren Beschreibung hiermit verwiesen wird. Konstruktiv unterschiedliche, jedoch funktionell gleichartige Teile erhalten dieselben Bezugszeichen mit einem hochgesetzten Strich. Der zentrale Unterschied besteht im Aufbau der Energieverbrauchs-Steuer-Einheit, die durch eine Stromversorgungs-Einheit 21 und eine über eine Spannungs-Versorgungs-Leitung 22 verbundene Ein-/Ausschalt-Steuer-Einheit 23 gebildet wird. Die Einheit 23 ist auch für die Taktversorgung verantwortlich. Die Einheit 23 ist über eine Daten-/Steuer-Leitung 24 mit der zentralen Datenverarbeitungs-Einheit 12 verbunden. Die Ein-/Ausschalt-Steuer-Einheit 23 wird über die Leitung 22 permanent mit Strom versorgt. Die Einheit 23 versorgt dann ihrerseits die Einheiten 10, 12, 15 und 16 mit Strom und dem Systemtakt und kann autonom die Stromversorgung oder die Versorgung mit Systemtakt beeinflussen. Bei dem Umschalten von dem Normalbetriebs-Modus in den Energiespar-Modus wird durch die Einheit 23 die Strom- und/oder System-Takt-Versorgung reduziert bzw. unterbrochen. Vorteilhaft ist hieran ebenfalls, dass bei dem Betrieb des Pager-Geräts 9 vergleichsweise wenig Energie verbraucht wird, wodurch die bei dem ersten Ausführungsbeispiel beschriebenen Vorteile eintreten.

## Patentansprüche

1. Pager-System mit
a) einer Basis-Transceiver-Station (2) zur kabellosen Übertragung von Daten nach dem GSM-Standard,
b) einem SMS-Center (5) zur Speicherung von Pager-Kurznachrichten, das mit der Basis-Transceiver-Station (2) in datenübertragender Weise verbunden ist und
c) mindestens einem Pager-Gerät (9), welches aufweist
i) eine nach dem GSM-Standard arbeitende Sende-/Empfangs-Einheit (10) zum kabellosen Empfang von Pager-Kurznachrichten von der Basis Transceiver-Station (2),
ii) eine mit der Sende-/Empfangs-Einheit (10) in datenübertragender Weise verbundene Ausgabe-Einheit (15) zur Anzeige der empfangenen Pager Kurznachrichten und
iii) eine Energieverbrauchs-Steuer-Einheit die derart ausgebildet ist, dass sie für vorbestimmbare Zeiträume von einem Normalbetriebs-Modus in einen Energiespar-Modus schaltet.

2. Pager-System gemäß Anspruch 1,
**dadurch gekennzeichnet,**
**dass** eine mit dem SMS-Center (5) datenübertragender Weise verbundene Eingabe-Einheit (7) zur Eingabe von Pager-Kurznachrichten vorgesehen ist.

3. Pager-System gemäß Anspruch 1 oder 2,
**dadurch gekennzeichnet,**
**dass** eine mit der Sende-/Empfangs-Einheit (10) und der Ausgabe-Einheit (15) in datenübertragender Weise verbundene zentrale Datenverarbeitungs-Einheit (12) vorgesehen ist.

4. Pager-System gemäß Anspruch 3,
**dadurch gekennzeichnet,**
**dass** die Energieverbrauchs-Steuer-Einheit eine Takt-Steuer-Einheit (17) zur Beeinflussung der Taktfrequenz aufweist.

5. Pager-System gemäß Anspruch 3 oder 4,
**dadurch gekennzeichnet,**
**dass** die Energieverbrauchs-Steuer-Einheit die Sende-/Empfangs-Einheit (10) und/oder die Ausgabe-Einheit (15) und/oder die zentrale Datenverarbeitungs-Einheit (12) für vorbestimmbare Zeiträume von der Energieversorgung trennt.

6. Pager-System gemäß einem der Ansprüche 3 bis 5,
**dadurch gekennzeichnet,**
**dass** die zentrale Datenverarbeitungs-Einheit (12) die Sende-/Empfangs-Einheit (10) in der Weise ansteuert, dass diese beim Vorliegen des Normalbetriebs-Modus von der Basis Transceiver-Station (2) abfragt, ob Pager-Kurznachrichten im SMS-Center (5) gespeichert sind und diese anschließend von der Basis-Transceiver-Station (2) an die Sende-/Empfangs-Einheit (10) übertragen werden.

7. Pager-System gemäß Anspruch 3,
**dadurch gekennzeichnet,**
**dass** die Energieverbrauchs-Steuer-Einheit eine Stromversorgungs-Einheit (17; 21) aufweist.

8. Pager-System gemäß Anspruch 7,
**dadurch gekennzeichnet,**
**dass** die Energieverbrauchs-Steuer-Einheit eine Ein-/Ausschalt-Steuereinheit (23) aufweist, die mit der Stromversorgungs-Einheit (21) elektrisch leitend verbunden ist.

9. Pager-System gemäß Anspruch 8,
**dadurch gekennzeichnet,**
**dass** die Ein-/Ausschalt-Steuereinheit (23) derart ausgebildet ist, dass sie das Umschalten von dem Normalbetriebs-Modus in den EnergiesparModus und umgekehrt bewirkt.

10. Pager-System gemäß einem der vorangehenden Ansprüche,
**dadurch gekennzeichnet,**
**dass** eine mit der zentralen Datenverarbeitungs-Einheit (12) in datenübertragender Weise verbundene Speicher-Einheit (16) zur Speicherung von Pager-Kurznachrichten vorgesehen ist.
